# EUROPÄISCHE PATENTSCHRIFT

(11) **EP 3 931 399 B1**
(45) Veröffentlichungstag und Bekanntmachung des Hinweises auf die Patenterteilung: **22.01.2025**
(21) Anmeldenummer: 20708673.7
(22) Anmeldetag: 21.02.2020
(51) Int. Cl.: E02D 27/42, F03D 13/20, E04H 12/34

(54) **FUNDAMENT FÜR EINE WINDKRAFTANLAGE**
FOUNDATION FOR A WIND TURBINE
FONDATION POUR UNE ÉOLIENNE

(30) Priorität: 28.02.2019 AT 792019
(43) Veröffentlichungstag der Anmeldung: 05.01.2022
(73) Patentinhaber: Holcim Technology Ltd, 6300 Zug (CH)
(72) Erfinder: SCHULDT, Christian, 5113 Holderbank (CH)
(74) Vertreter: SONN Patentanwälte GmbH & Co KG
(86) Internationale Anmeldenummer: PCT/IB2020/051465
(87) Internationale Veröffentlichungsnummer: WO 2020/174334

(56) Entgegenhaltungen:
- WO-A1-2017/141098
- AU-B1- 2014 265 049
- CN-U- 202 627 017
- CN-U- 205 369 295
- DK-A- 200 000 612
- US-A1- 2011 061 321

## Beschreibung

Die Erfindung betrifft ein Fundament für eine Windkraftanlage mit einem kreisförmigen oder polygonalen, in mehrere Ringabschnitte unterteilten Standfuß zum Tragen eines Turms und mit sich vom Standfuß radial nach außen erstreckenden Stützelementen, wobei die Ringabschnitte und die Stützelemente als vorgefertigte Betonelemente ausgebildet oder aus diesen zusammengesetzt sind und wobei benachbarte Stützelemente in Umfangsrichtung voneinander beabstandet sind.

Die Erfindung betrifft weiters eine Windkraftanlage mit einem einen Rotor tragenden Turm, der auf einem erfindungsgemäßen Fundament montiert ist. Das Dokument DK200000612A beschreibt ein Fundament für eine Windkraftanlage, das die Merkmale des Oberbegriffes des Anspruchs 1 enthält.

Ein anderes Fundament der eingangs genannten Art ist z.B. in der WO 2017/141098 A1 beschrieben und besteht im Wesentlichen aus vorgefertigten Betonelementen. Solche Betonelemente werden in einer Vorfertigungsanlage hergestellt und zum Einsatzort transportiert, wo sie durch die Verwendung eines Krans in Position gebracht werden und dann miteinander verbunden werden können. Auf diese Weise kann die Dauer der Bauvorgänge am Einsatzort erheblich verringert werden. Die vorgefertigten Betonelemente bilden, wenn sie miteinander verbunden sind, ein Fundament mit einem zentralen Standfuß und mehreren Rippen bzw. Stützelementen, die jeweils vom Standfuß radial nach außen vorstehen. Jedes vorgefertigte Betonelement bildet eines der Stützelemente und einen zugeordneten Umfangsabschnitt des Standfußes. Nachdem das Fundament auf diese Art und Weise zusammengesetzt wurde, wird der Turm oder Mast der Windkraftanlage auf dem Standfuß errichtet und durch die Verwendung von Ankerbolzen am Standfuß befestigt.

Durch die Verwendung vorgefertigter Betonelemente können die Elemente in einer kontrollierten Umgebung hergestellt werden, so dass die Möglichkeit gegeben wird, den Beton unter optimalen Bedingungen zu härten und den Vorgang genau zu überwachen. Die Qualität des gehärteten Betons kann verbessert werden, weil es in einer Vorfertigungsanlage eine bessere Kontrolle der Materialqualität und der Arbeitsausführung gibt als an einer Baustelle.

Windkraftanlagen sind Lasten und Beanspruchungen spezifischer Natur ausgesetzt, die vom Fundament aufgenommen werden müssen. Der Wind selbst wirkt in einer nicht vorhersehbaren und veränderlichen Weise. Dazu kommen bei größeren Anlagen dynamische Lastkomponenten infolge von Vibrationen und Resonanzen. Ferner übertragen Türme mit Höhen von 100 Meter und mehr infolge des beträchtlichen Kippmoments erhebliche exzentrische Lasten auf das Fundament. Wenn der Turm einem Biegemoment ausgesetzt ist, muss der Beton des Fundaments der Kompression widerstehen, die in der komprimierten Zone auftritt, und die Verstärkungsstruktur des Betons muss die Dehnungskräfte im entgegengesetzten Teil des Fundaments aufnehmen, weil der Beton selbst eine verhältnismäßig geringe Dehnungsfestigkeit aufweist.

Fundamente aus vorgefertigten verstärkten Betonelementen haben den Vorteil, dass die Leistungsfähigkeit und die Qualität des Betons höher sind, so dass ein geringeres Risiko einer Rissbildung und eine höhere Fähigkeit, dynamischen und statischen Lasten zu widerstehen, gegeben sind. Ein Nachteil besteht jedoch darin, dass die einzelnen vorgefertigten Betonelemente bestimmte Abmessungen nicht überschreiten dürfen, damit sie von der Vorfertigungsanlage zum Einsatzort transportiert werden können.

Ein erheblicher Beitrag zur Stabilität eines Fundaments wird erreicht, indem eine das Fundament aufnehmende Baugrube mit Erde oder einem anderen Auffüllmaterial wiederaufgefüllt wird, wodurch dieses auf den vorgefertigten Betonelementen des Fundaments zu liegen kommt. Auf diese Weise kann das Gewicht des Auffüllmaterials verwendet werden, um eine vertikale Last auf die vorgefertigten Betonelemente auszuüben, die einem möglichen Kippmoment entgegenwirkt.

Um die Stabilität eines Windmühlenfundaments zu erhöhen, insbesondere seine Widerstandsfähigkeit gegen ein Kippmoment, ohne die Länge und/oder die Breite der vorgefertigten Betonelemente zu vergrößern, wurde in der WO 2017/141098 A1 vorgeschlagen, den Zwischenraum zwischen zwei benachbarten vorgefertigten Betonelementen jeweils durch eine Überbrückungsplatte zu überbrücken. Die Überbrückungsplatten bieten eine zusätzliche Auflagefläche für das Auffüllmaterial, wodurch die dem Kippmoment entgegenwirkende vertikale Lastkomponente erhöht werden kann. Außerdem führen die Überbrückungsplatten zu einer Stabilisierung und zu einer gegenseitigen Abstützung von benachbarten Stützelementen, weil die Stützelemente insbesondere im radial äußeren, d.h. vom Standfuß entfernten Bereich zu einer einheitlichen Struktur miteinander verbunden werden. Zur Lagesicherung der Überbrückungsplatten erfolgt deren Befestigung an den Stützelementen beispielsweise mit Hilfe von Schraubverbindungen, was jedoch einen hohen Montageaufwand mit sich bringt.

Die vorliegende Erfindung zielt daher darauf ab, eine Ausbildung des Fundaments zu schaffen, welche die genannten Vorteile von Überbrückungsplatten zumindest teilweise beibehält, aber den hohen Montageaufwand von Überbrückungsplatten vermeidet.

Zur Lösung dieser Aufgabe besteht die Erfindung bei einem Fundament gemäß Anspruch 1.

Verbindung von zwei benachbarten, radial verlaufenden Stützelementen mittels eines tangentialen Balkens erzeugt aus der bisher nur von den Stützelementen gebildeten sternförmigen Stützstruktur eine aus mehreren Dreiecken gebildete Stützstruktur. Dies führt zu einer bessern Kraftverteilung und -ableitung insbesondere an der in Folge von Kippmomenten komprimierten Zone des Fundaments. Die erfindungsgemäße Anordnung von Balken stellt so wie im Falle der Überbrückungsplatten die Stabilisierung und die gegenseitige Abstützung von benachbarten Stützelementen sicher ohne dass Überbrückungsplatten unbedingt erforderlich sind. Der mit dem Transport und der Montage von Überbrückungsplatten verbundene Aufwand kann somit entfallen. Auf Grund der Ausbildung von den Standfuß umgebenden Stützdreiecken können die radial verlaufenden Stützelemente schlanker dimensioniert und damit gewichtsoptimiert ausgebildet werden, weil die Abstützung des Turms nicht mehr ausschließlich auf einem Kragarmmodell der radialen Stützelemente beruht.

Selbstverständlich ist es aber auch möglich, die erfindungsgemäßen Balken in Kombination mit Überbrückungsplatten einzusetzen. In diesem Fall kann aber auf eine gesonderte Befestigung der Überbrückungsplatten an den Stützelementen mit Hilfe von Schrauben verzichtet werden, wenn die Balken selbst eine radiale Abstützung der Überbrückungsplatten sicherstellen. Die Balken bilden hierbei eine formschlüssige Sicherung gegen ein radiales Wegwandern der Überbrückungsplatten vom Standfuß.

Als Balken im Sinne der Erfindung ist ein längliches Betonelement zu verstehen, dessen sich in tangentialer Richtung des Fundaments erstreckende Längsausdehnung die Breite und Höhe deutlich übersteigt, wobei die Längsausdehnung vorzugswiese wenigstens dem Doppelten, bevorzugt wenigstens dem Fünffachen der Breite und/oder Höhe entspricht.

Der Begriff "tangential" bezieht sich auf eine Hochachse des Fundaments, um die herum der kreisförmige oder polygonale Standfuß angeordnet ist, und bringt zum Ausdruck, dass die erfindungsgemäß vorgesehenen Balken im Wesentlichen tangential an einen gedachten Kreis anliegen, durch dessen Mittelpunkt die genannte Achse verläuft.

Die erfindungsgemäßen Balken können vorzugsweise gerade verlaufen. Es sind aber auch abweichende Formen denkbar, wie z.B. Balken mit einem gekrümmten Verlauf.

Erfindungsgemäß ist es vorgesehen, dass jedes Paar von benachbarten Stützelementen jeweils mittels eines Balkens miteinander verbunden ist, sodass die Balken ein den Standfuß bzw. die radialen Stützelemente umschließendes Polygon bilden. Mit anderen Worten gehen von jedem Stützelement zwei Balken aus, jeweils einer führt zum rechten benachbarten Stützelement und einer führt zum linken benachbarten Stützelement.

Die Verbindung der Balken mit den Stützelementen kann auf verschiedene Weise erfolgen, wobei jedenfalls gewährleistet werden soll, dass eine Kraftübertragung zwischen Balken und Stützelement in radialer und ggf. auch in tangentialer Richtung ermöglicht wird. Eine bevorzugte Ausbildung sieht hierbei vor, dass der Balken an seinen Enden formschlüssig oder mit Hilfe von Verbindungsmitteln an den benachbarten Stützelementen befestigt ist.

In vorteilhafter Weise sind die Balken an dem dem Standfuß abgewandten Ende der benachbarten Stützelemente an diesen befestigt. Die Balken sind somit an den freien Enden der Stützelemente befestigt, sodass alle Balken zusammen eine umlaufende, polygonale Begrenzung des Fundaments ausbilden.

Die Balken übernehmen hierbei zusätzlich die Funktion einer umlaufenden Stütze, und zwar, wenn der Balken erfindungsgemäß ein Querschnittsprofil mit zwei Schenkeln, insbesondere ein L-förmiges Profil, aufweist, wobei der eine Schenkel an den benachbarten Stützelementen befestigt ist und der andere Schenkel eine radial von den Stützelementen nach außen vorstehende, gegen den Boden abstützbare Stützstruktur ausbildet. Eine derartige zusätzliche Stützstruktur erlaubt es, die radialen Stützelemente schlanker zu dimensionieren, sodass insgesamt eine Gewichtsoptimierung gelingt. Außerdem können die radialen Stützelemente auf Grund der durch die Balken geschaffenen zusätzlichen radialen Abstützung in ihrer radialen Erstreckung kürzer ausgebildet werden, sodass die Einhaltung einer maximalen Transportlänge erleichtert wird.

Die radial nach außen vorstehende Stützstruktur kann auch als Anbaustelle zum Anbauen von weiteren Stützelementen verwendet werden, sodass die radiale Erstreckung des Fundaments weiter vergrößert werden kann.

Erfindungsgemäß ist der Zwischenraum zwischen zwei benachbarten Stützelementen wie bereits erwähnt jeweils durch wenigstens eine Überbrückungsplatte überbrückt, die vorzugsweise als vorgefertigte Betonplatte ausgebildet ist. Dabei kann auf das Vorsehen von Schraubverbindungen zwischen der wenigstens einen Überbrückungsplatte und den radialen Stützelementen verzichtet werden, weil die wenigstens eine Überbrückungsplatte sich radial nach außen gegen den Balken abstützen kann.

Der Zwischenraum zwischen zwei benachbarten Stützelementen kann auch durch eine Mehrzahl von parallelen Überbrückungsplatten überbrückt sein, die als vorgefertigte Betonplatte ausgebildet sind. Die Überbrückungsplatten verlaufen hierbei insbesondere im Wesentlichen in tangentialer Richtung, wobei eine Mehrzahl von Überbrückungsplatten in radialer Richtung gesehen aneinander anschließen.

Die Überbrückungsplatten stellen eine überaus große horizontale Oberfläche zur Verfügung, auf die aufgeschüttetes Auffüllmaterial eine vertikale Kraft ausüben kann, welche dem Kippmoment der Windmühle entgegenwirkt. Die Überbrückungsplatten liegen hierbei zumindest entlang eines Teils ihrer Seitenränder auf den Stützelementen auf, so dass die vertikale Last, die durch das Auffüllmaterial auf die Überbrückungsplatten ausgeübt wird, auf das die radialen Stützelemente und damit auf das gesamte Fundament übertragen werden kann.

Um die Anzahl von am Einsatzort zusammenzusetzender vorgefertigter Betonelemente zu minimieren, sieht eine bevorzugte Weiterbildung der Erfindung vor, dass ein Ringabschnitt und ein zugeordnetes Stützelement als ein vorgefertigtes Betonelement einstückig miteinander ausgebildet sind.

Bevorzugt bestehen die vorgefertigten Betonelemente aus verstärktem Beton, der eine Verstärkungsstruktur, insbesondere Verstärkungselemente, -profile, -stangen oder -drähte, aufweist, welche in die vorgefertigten Betonelemente eingebettet sind und/oder die als Spannelemente zum Zusammenspannen der vorgefertigten Betonelemente zu Spannbetonelementen ausgebildet sind.

Ein Nachteil eines Fundaments, das aus vorgefertigten Betonelementen zusammengesetzt ist, besteht darin, dass im Gegensatz zu am Einsatzort aus Ortsbeton gegossenen Fundamenten keine monolithische Struktur bereitgestellt wird, so dass technische Lösungen für das sichere Verbinden der vorgefertigten Betonelemente zur Nachbildung einer monolithischen Struktur entwickelt werden müssen.

In diesem Zusammenhang sieht eine bevorzugte Ausführungsform der Erfindung vor, dass eine Verbindungsstruktur bereitgestellt ist, welche die die Stützelemente und den Standfuß ausbildenden vorgefertigten Betonelemente zusammenhält und bevorzugt mit der Verstärkungsstruktur gekoppelt ist.

Die Verbindungsstruktur kann von einer beliebigen Art sein, die dafür geeignet ist, die vorgefertigten Betonelemente starr zusammenzuhalten, um eine monolithische Struktur zu bilden. Die Verbindungsstruktur unterscheidet sich von der Verstärkungsstruktur und wird daher vorzugsweise nicht in die vorgefertigten Betonelemente eingebettet. Gemäß einem bevorzugten Merkmal der Erfindung wird die Verbindungsstruktur mit der Verstärkungsstruktur gekoppelt, wodurch ein ununterbrochener Lastweg zwischen den Verstärkungsstrukturen ermöglicht wird, so dass die in das Fundament eingebrachten Kräfte wirksam verteilt werden. Im Kontext der Erfindung bedeutet das Koppeln der Verbindungsstruktur und der Verstärkungsstruktur, dass die auf die Verstärkungsstruktur einwirkenden Kräfte auf die Verbindungsstruktur übertragen werden, ohne dass Beton dazwischen angeordnet ist, und umgekehrt. Demgemäß können die Verbindungsstruktur und die Verstärkungsstruktur direkt oder über ein von Beton verschiedenes starres Verbindungselement miteinander verbunden sein.

Die Verbindungsstruktur kann aber auch keine direkte Kopplung mit der Verstärkungsstruktur aufweisen. Beispielsweise können die Ringabschnitte des Standfußes bzw. die Stützelemente mit Hilfe von umlaufenden Spannkabeln gegeneinander verspannt werden. Die auflaufenden Spannkabel können dabei in wenigstens einem umlaufenden Kanal des Ringabschnitts und/oder der Stützelemente angeordnet sein.

Eine bevorzugte Ausbildung sieht hierbei vor, dass der Standfuß bzw. dessen Ringabschnitte an seinem bzw. ihren der Standfläche für den Turm zugewandten Ende(n) einen umlaufenden, sich vom Standfuß radial nach außen erstreckenden Vorsprung aufweist bzw. aufweisen mit zumindest einem im Vorsprung vorgesehenen und in Umfangsrichtung verlaufenden Kanal zur Aufnahme eines Spannkabels. Dadurch, dass ein umlaufender, sich radial vom Standfuß nach außen erstreckender Vorsprung geschaffen wird, der im oberen Bereich, d.h. am Ende mit der Standfläche des Standfußes angesetzt ist, wird die Möglichkeit geschaffen, ohne das Verschrauben der vorgefertigten Betonelemente das Auslangen zu finden, da zumindest ein Spannkabel, in der Regel aber eine Mehrzahl von Spannkabeln zum Zusammenspannen der vorgefertigten Betonelemente im oberen Bereich des Fundaments auf einem relativ großen Umfang geführt werden kann. Ein auf großem Umfang geführtes Spannkabel kann eine bessere Spann- und Fügekraft entwickeln als Spannkabel, die auf kleinem Umfang laufen, sodass mit der erfindungsgemäßen Maßnahme eine hocheffiziente Verspannung der vorgefertigten Betonelemente erzielt wird. Folglich kann auf die Verschraubung der Betonelemente weitgehend oder vollkommen verzichtet werden. Zum Einführen und Spannen der Spannkabel ist es ausreichend, wenn die vorgefertigten Betonelemente an der gewünschten Stelle möglichst nahe zueinander positioniert werden, wobei jedoch keine genaue Ausrichtung von Bohrlöchern zueinander erfolgen muss. Hierauf kann das Spannkabel oder die Mehrzahl von Spannkabeln in den im Vorsprung laufenden Kanal eingeführt und zusammengezogen werden. Dabei werden die vorgefertigten Betonelemente zusammengezogen und zueinander ausgerichtet und das fertige Fundament wird ohne Verschraubungen erhalten.

Der für die Herstellung der vorgefertigten Betonelemente verwendete Beton kann von einem beliebigen Typ sein, der typischerweise auch für das Gießen von Beton am Einsatzort verwendet wird. Zusätzlich zu Zuschlagstoffen und Wasser enthält Beton Portland-Zement als hydraulisches Bindemittel.

Es kann bevorzugt auch faserverstärkter Beton verwendet werden, um die vorgefertigten Betonelemente herzustellen. Die Fasern können aus einem beliebigen Fasermaterial bestehen, das zur Erhöhung der strukturellen Integrität, insbesondere der Stärke, der Stoßfestigkeit und/oder der Haltbarkeit, der sich ergebenden Betonstruktur beiträgt. Faserverstärkter Beton enthält kurze diskrete Verstärkungsfasern, die gleichmäßig verteilt und zufällig orientiert sind.

Vorzugsweise sind die Verstärkungsfasern Kohlefasern, synthetische Fasern und insbesondere Polypropylenfasern. Alternativ können die Verstärkungsfasern Stahlfasern, Glasfasern oder Naturfasern sein. Weiters ist auch die Verwendung von HPC (High Performance Concrete) und UHPC (Ultra High Performance Concrete) möglich. Diese Betonarten sind hochfeine Bindemittel mit speziellen, hochfeinen Zuschlagstoffen und entsprechenden Additiven und sind aufgrund ihres relativ geringen Gewichts als vorteilhaft anzusehen.

Beim Betrieb trägt das Fundament eine Onshore-Windturbine mit einem Turm und einem am Turm montierten Rotor, wobei der Turm durch herkömmliche Mittel, beispielsweise Ankerbolzen, am Standfuß des erfindungsgemäßen Fundaments montiert wird. Der Rotor weist eine im Wesentlichen horizontale Drehachse auf.

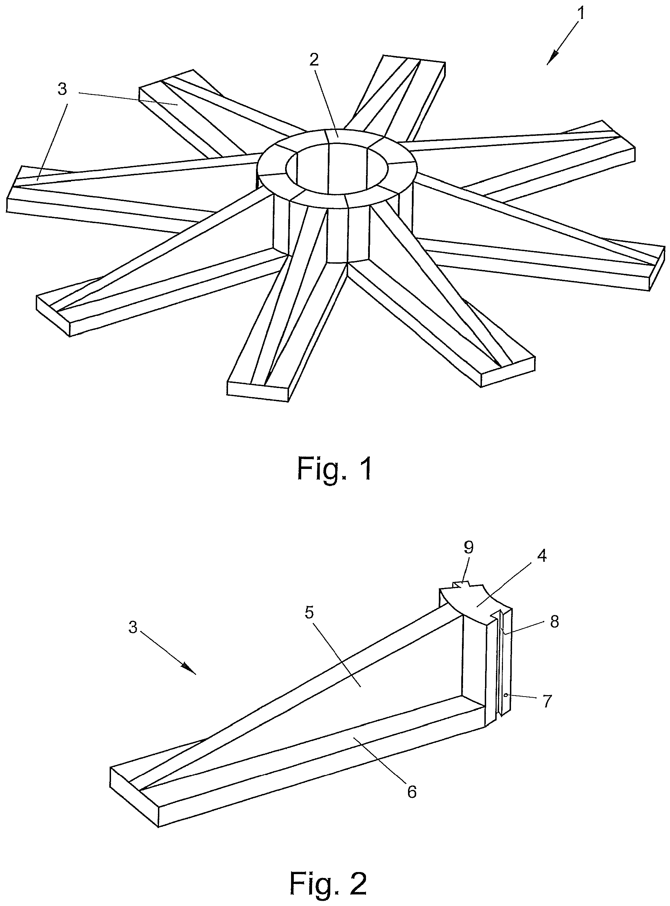

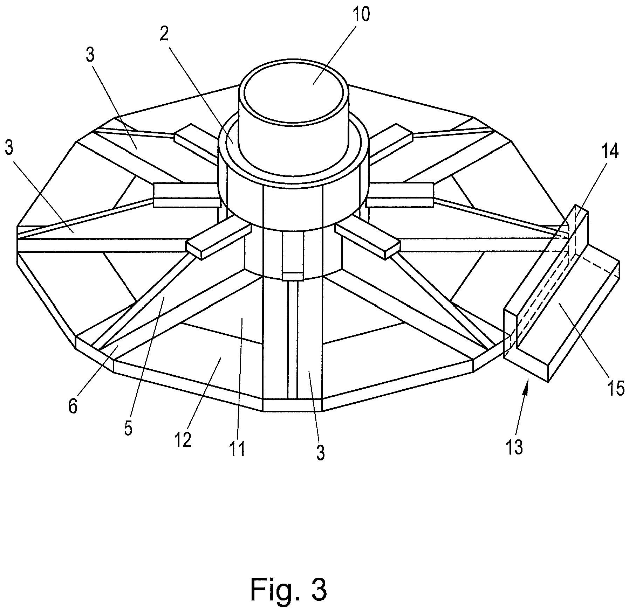

Nachfolgend wird die Erfindung mit Bezug auf in der Zeichnung dargestellte Ausführungsbeispiele näher beschrieben. Darin zeigen Fig. 1 ein Fundament für eine Windkraftanlage, das aus vorgefertigten Betonelementen besteht, Fig. 2 ein vorgefertigtes Betonelement, das im Fundament aus Fig. 1 verwendet wird, Fig. 3 eine erfindungsgemäße Ausbildung des Fundaments mit Überbrückungsplatten und äußeren Stützbalken.

In Fig. 1 ist ein Fundament 1 dargestellt, das eine Anzahl vorgefertigter Betonelemente 3 aufweist. Das Fundament 1 weist einen kreisförmigen Standfuß 2 in Form eines Hohlzylinders zum Tragen eines Turms einer Windkraftanlage auf. Das Fundament 1 weist ferner mehrere Stützelemente 5 auf, die vom Standfuß 2 radial nach außen vorstehen. Der Standfuß 2 ist in mehrere Umfangsabschnitte 4 unterteilt (Fig. 2), wobei ein Umfangsabschnitt 4 und ein Stützelement 5 jeweils integral miteinander als ein vorgefertigtes Betonelement 3 ausgebildet sind, wie dies in Fig. 2 dargestellt ist. Das Stützelement 5 bzw. das vorgefertigte Betonelement 3 weist ferner eine Basisplatte 6 auf, die ebenfalls integral mit dem Stützelement 5 ausgebildet ist. Die vorgefertigten Betonelemente 3 bestehen aus verstärktem Beton mit Verstärkungsstangen, die in die vorgefertigten Betonelemente 3 eingebettet sind.

Wenngleich die Stützelemente in Fig. 2 als ein vorgefertigtes Betonelement dargestellt sind, das aus einem einzigen Stück besteht, können die Stützelemente auch aus zwei oder mehr Abschnitten zusammengesetzt werden. Dies ist besonders vorteilhaft, wenn ein Stützelement zu verwirklichen ist, dessen radiale Länge die zulässige Länge gewöhnlicher Transporteinrichtungen übersteigt. Insbesondere können zwei oder mehr Abschnitte als getrennte vorgefertigte Betonelemente hergestellt werden, die getrennt zum Einsatzort transportiert werden und am Einsatzort starr aneinander montiert werden.

Zum genauen Ausrichten der benachbarten Umfangsabschnitte 4 miteinander können die Seitenflächen ineinander greifende Formpasselemente 8 und 9 in der Art einer trapezförmigen Zungen- und Rillenanordnung aufweisen, die miteinander zusammenwirken, um die relative Position der Elemente 3 zu gewährleisten. Ferner können die vorgefertigten Betonelemente 3 durch wenigstens ein Spannkabel aneinander festgezogen werden, wobei das wenigstens eine Spannkabel in einem umfänglichen, insbesondere kreisförmigen Durchgang, der im Standfuß 2 ausgebildet ist, angeordnet werden kann, wobei die Öffnung des Durchgangs mit 7 bezeichnet ist. Natürlich können auch mehrere Durchgänge bereitgestellt werden.

Fig. 3 zeigt die erfindungsgemäße Ausführungsform, bei welcher der Zwischenraum zwischen zwei benachbarten vorgefertigten Betonelementen 3 durch Überbrückungsplatten 11 und 12 überbrückt ist. Die Überbrückungsplatten 11 und 12 müssen dabei nicht durch Bolzen an der Basisplatte 6 der vorgefertigten Betonelemente 3 befestigt werden, sondern können lediglich formschlüssig auf den Stützelementen aufliegen. Zur Fixierung der Überbrückungsplatten 11, 12 sind tangentiale Balken 13 vorgesehen, die jeweils zwei benachbarte Stützelemente 3 miteinander verbinden. Die tangentialen Balken 13 bilden einen Anschlag, welcher eine Bewegung der Überbrückungsplatten 11, 12 vom Standfuß 2 weg verhindern. Der Übersichtlichkeit halber ist in Fig. 3 nur einer der Balken 13 dargestellt. Da jedes Paar von benachbarten Stützelementen 3 mittels eines Balken 13 miteinander verbunden ist, sind im vorliegenden Beispiel insgesamt acht Balken 13 vorgesehen, sodass die Balken 13 zusammen einen polygonalen, insbesondere oktogonalen äußeren Rand des Fundaments ausbilden.

Bei der Ausbildung gemäß Fig. 3 sind die Balken 13 als Winkelstützen ausgebildet, die einen L-förmigen Querschnitt mit einem ersten Schenkel 14 und einem zweiten Schenkel 15 aufweisen. Der zweite Schenkel 15 erstreckt sich radial nach außen und weist eine Bodenabstützfläche auf, mit welcher sich der Balken 13 am Boden abstützen kann. Dadurch wird eine zusätzliche Abstützung des Fundaments erreicht.

Ein unterer Abschnitt des am Standfuß 3 zu befestigenden Turms der Windkraftanlage ist in Fig. 3 mit 10 bezeichnet.

## Patentansprüche

1. Fundament (1) für eine Windkraftanlage mit einem kreisförmigen oder polygonalen, in mehrere Ringabschnitte unterteilten Standfuß (2) zum Tragen eines Turms und mit sich vom Standfuß (2) radial nach außen erstreckenden Stützelementen (5), wobei die Ringabschnitte und die Stützelemente (5) als vorgefertigte Betonelemente (3) ausgebildet oder aus diesen zusammengesetzt sind und wobei benachbarte Stützelemente (5) in Umfangsrichtung voneinander beabstandet und wobei benachbarte Stützelemente (5) jeweils mittels eines tangential verlaufenden, als vorgefertigtes Betonelement ausgebildeten Balkens (13) miteinander verbunden sind, **dadurch gekennzeichnet, dass** der Balken (13) ein Querschnittsprofil mit zwei Schenkeln (14,15), insbesondere ein L-förmiges Profil, aufweist, wobei der eine Schenkel (14) an den benachbarten Stützelementen (5) befestigt ist und der andere Schenkel (15) eine radial von den Stützelementen (5) nach außen vorstehende, gegen den Boden abstützbare Stützstruktur ausbildet, der Zwischenraum zwischen zwei benachbarten Stützelementen (5) jeweils durch wenigstens eine Überbrückungsplatte (11,12) überbrückt ist, die vorzugsweise als vorgefertigte Betonplatte ausgebildet ist und die wenigstens eine Überbrückungsplatte (11,12) radial nach außen gegen den Balken (13) abgestützt ist.

2. Fundament (1) nach Anspruch 1, **dadurch gekennzeichnet, dass** der Balken (13) an seinen Enden formschlüssig oder mit Hilfe von Verbindungsmitteln an den benachbarten Stützelementen (5) befestigt ist.

3. Fundament (1) nach Anspruch 1 oder 2, **dadurch gekennzeichnet, dass** der Balken (13) an dem dem Standfuß (2) abgewandten Ende der benachbarten Stützelemente (5) an diesen befestigt ist.

4. Fundament (1) nach einem der Ansprüche 1, 2 oder 3, **dadurch gekennzeichnet, dass** ein Ringabschnitt und ein zugeordnetes Stützelement (5) als ein vorgefertigtes Betonelement einstückig miteinander ausgebildet sind.

5. Fundament (1) nach einem der Ansprüche 1 bis 4, **dadurch gekennzeichnet, dass** die vorgefertigten Betonelemente (3) aus verstärktem Beton bestehen, der eine Verstärkungsstruktur, insbesondere Verstärkungselemente, - profile, -stangen oder -drähte, aufweist, welche in die vorgefertigten Betonelemente (3) eingebettet sind und/oder die als Spannelemente zum Zusammenspannen der vorgefertigten Betonelemente (3) zu Spannbetonelementen ausgebildet sind.

6. Fundament (1) nach einem der Ansprüche 1 bis 5, **dadurch gekennzeichnet, dass** eine Verbindungsstruktur bereitgestellt ist, welche die die Stützelemente (5) und den Standfuß (2) ausbildenden vorgefertigten Betonelemente (3) zusammenhält und bevorzugt mit der Verstärkungsstruktur gekoppelt ist.

7. Windkraftanlage mit einem einen Rotor tragenden Turm, wobei der Turm auf einem Fundament (1) nach einem der Ansprüche 1 bis 6 montiert ist.

## Claims

1. A foundation (1) for a wind power plant with a circular or polygonal pedestal (2) divided into several ring sections for carrying a tower and with support elements (5) extending radially outward from the pedestal (2), wherein the ring sections and the support elements (5) are designed as prefabricated concrete elements (3) or are assembled from such prefabricated concrete elements (3), and wherein adjacent support elements (5) are spaced apart from one another in the circumferential direction, and wherein adjacent support elements (5) are each connected to one another by means of a tangentially extending beam (13) designed as a prefabricated concrete element, **characterized in that** the beam (13) comprises a cross-sectional profile with two legs (14,15), in particular an L-shaped profile, wherein one leg (14) is fastened to the adjacent support elements (5) and the other leg (15) forms a support structure protruding radially outward from the support elements (5) and can be supported against the ground, and the space between two adjacent support elements (5) is each bridged by at least one bridging plate (11,12), preferably designed as a prefabricated concrete slab, and the at least one bridging plate (11,12) is supported radially outward against the beam (13).

2. The foundation (1) according to claim 1, **characterized in that** the beam (13) is fastened at its ends in a form-fitting manner or with the aid of connecting means to the adjacent support elements (5).

3. The foundation (1) according to claim 1 or 2, **characterized in that** the beam (13) is fastened to the end of the adjacent support elements (5) facing away from the pedestal (2).

4. The foundation (1) according to any one of claims 1, 2, or 3, **characterized in that** a ring section and an associated support element (5) are formed integrally with one another as a single prefabricated concrete element.

5. The foundation (1) according to any one of claims 1 to 4, **characterized in that** the prefabricated concrete elements (3) consist of reinforced concrete which comprises a reinforcement structure, in particular reinforcement elements, profiles, rods, or wires, which are embedded in the prefabricated concrete elements (3) and/or are designed as tensioning elements for tensioning the prefabricated concrete elements (3) together to form prestressed concrete elements.

6. The foundation (1) according to any one of claims 1 to 5, **characterized in that** a connection structure is provided which holds together the prefabricated concrete elements (3) forming the support elements (5) and the pedestal (2) and is preferably coupled to the reinforcement structure.

7. A wind power plant with a tower carrying a rotor, wherein the tower is mounted on a foundation (1) according to any one of claims 1 to 6.

## Revendications

1. Base (1) pour une éolienne avec un socle circulaire ou polygonal (2), divisé en plusieurs portions annulaires, pour le support d'une tour et avec des éléments d'appui (5) s'étendant radialement vers l'extérieur à partir du socle (2), dans laquelle les portions annulaires et les éléments d'appui (5) sont conçus comme des éléments préfabriqués en béton (3) ou sont constitué de ceux-ci et dans laquelle des éléments d'appui (5) adjacents sont distants entre eux dans la direction de la circonférence et dans laquelle des éléments d'appui (5) adjacents sont reliés entre eux au moyen d'une barre (13) tangentielle conçue comme un élément préfabriqué en béton,
**caractérisée en ce que** la barre (13) présente un profil en coupe transversale avec deux branches (14, 15), plus particulièrement un profil en forme de L, dans laquelle une branche (14) est fixée aux éléments d'appui (5) adjacents et l'autre branche (15) forme une structure d'appui dépassant radialement vers l'extérieur à partir des éléments d'appui (5) et pouvant être appuyée contre le sol, l'espace intercalaire entre deux éléments d'appui (5) adjacents est recouvert respectivement par au moins une plaque de recouvrement (11, 12) qui est conçue de préférence comme une plaque préfabriquée en béton et l'au moins une plaque de recouvrement (11, 12) est appuyée radialement vers l'extérieur contre la barre (13).

2. Base (1) selon la revendication 1, **caractérisée en ce que** la barre (13) est fixée, au niveau de ses extrémités, par complémentarité de forme ou à l'aide de moyens de liaison, aux éléments d'appui (5) adjacents.

3. Base (1) selon la revendication 1 ou 2, **caractérisée en ce que** la barre (13) est fixée aux éléments d'appui (5) adjacents au niveau de l'extrémité opposée au socle (2).

4. Base (1) selon l'une des revendications 1, 2 ou 3, **caractérisée en ce qu'**une portion annulaire et un élément d'appui (5) correspondant sont conçus d'une seule pièce comme un élément préfabriqué en béton.

5. Base (1) selon l'une des revendications 1 à 4, **caractérisée en ce que** les éléments préfabriqués en béton (3) sont constitués d'un béton renforcé qui présente une structure de renforcement, plus particulièrement des éléments, des profilés, des tiges ou des fils de renforcement qui sont intégrés dans les éléments préfabriqués en béton (3) et/ou qui sont conçus comme des éléments de serrage pour l'assemblage par serrage des éléments préfabriqués en béton (3) afin d'obtenir des éléments en béton précontraint.

6. Base (1) selon l'une des revendications 1 à 5, **caractérisée en ce qu'**une structure de liaison est mise à disposition qui maintient ensemble les éléments préfabriqués en béton (3) constituant les éléments d'appui (5) et le socle (2) et qui est couplé de préférence avec la structure de renforcement.

7. Éolienne avec une tour supportant un rotor, dans laquelle la tour est montée sur une base (1) selon l'une des revendications 1 à 6.
